**Europäisches Patentamt**

**European Patent Office**

**Office européen des brevets**

(19)

(11) Veröffentlichungsnummer: **0 175 167 B1**

(12)

# EUROPÄISCHE PATENTSCHRIFT

(45) Veröffentlichungstag der Patentschrift:
**14.06.89**

(21) Anmeldenummer: **85110585.8**

(22) Anmeldetag: **22.08.85**

(51) Int. Cl.⁴: **G06K 13/26**

(54) **Vorrichtung zum Halten und Führen von rollenförmig aufgewickelten Aufzeichnungsträgern.**

(30) Priorität: **05.09.84 DE 3432666**

(43) Veröffentlichungstag der Anmeldung:
**26.03.86 Patentblatt 86/13**

(45) Bekanntmachung des Hinweises auf die Patenterteilung:
**14.06.89 Patentblatt 89/24**

(84) Benannte Vertragsstaaten:
**CH DE FR GB IT LI NL SE**

(56) Entgegenhaltungen:
**DE-B- 2 443 312**
**DE-B- 2 935 095**
**US-A- 1 973 839**
**US-A- 3 497 136**

(73) Patentinhaber: **Siemens Aktiengesellschaft Berlin und München, Wittelsbacherplatz 2, D-8000 München 2(DE)**

(72) Erfinder: **Keck, Erich, Ing. grad., Lämmerweide 7a, D-8080 Fürstenfeldbruck(DE)**
Erfinder: **Scheibenpflug, Konrad Ing. grad., Kerschensteinerstrasse 20, D-8034 Germering(DE)**

## Beschreibung

Die Erfindung betrifft eine Vorrichtung gemäß dem Oberbegriff des Patentanspruches 1.

Vorrichtungen der eingangs genannten Art sind allgemein bekannt und mit Erfolg zur Anwendung gelangt.

So wird in der DE-B2 2 443 312 eine Halterung für Lochstreifenvorratsrollen beschrieben, die einen um eine ortsfeste Drehachse verschwenkbaren parallel zur Drehachse der Lochstreifenvorratsrolle verlaufenden Führungsbügel aufweist. Der Führungsbügel ist U-förmig ausgebildet und umfaßt im Arbeitszustand mit seinen Schenkeln beidseitig die Seitenflächen der Lochstreifenvorratsrolle. Die Halterung für die Lochstreifenvorratsrolle paßt sich damit deren Außenkonturen beim Abspulen an.

Die bekannte Halterung hat aber den Nachteil, daß sie relativ platzaufwendig ist und ein relativ großes die Lochstreifenhalterung aufnehmendes Gehäuse erfordert.

Eine Vorrichtung der eingangs genannten Art ist weiterhin aus der DE-B 2 935 095 bekannt. Darin wird eine Vorrichtung zum Halten und Führen von rollenförmig auf einen Aufnahmekern aufgesteckten, zu einem Wickel aufgewickelten Aufzeichnungsträger beschrieben, die einen schwenkbar gelagerten, U-förmigen, im Arbeitszustand die Seitenflächen des Wickels mit seinen Schenkeln beidseitig überdeckenden Führungsbügel aufweist. Der Führungsbügel ist um eine Achse senkrecht zu der Lagerachse des Aufnahmekernes verschwenkbar gelagert, wobei zum Aufsetzen des Wickels auf den Aufnahmekern der Wickel zunächst in den Führungsbügel eingeschoben wird.

Diese bekannte Vorrichtung ermöglicht zwar eine platzsparende Anordnung des rollenförmig aufgewickelten Aufzeichnungsträgers, ein Einlegen des Wickels ist jedoch relativ kompliziert. Außerdem ist eine derartige Vorrichtung nur für Wickel geringer Größe brauchbar.

Aufgabe der Erfindung ist es, eine Vorrichtung der eingangs genannten Art so auszugestalten, daß sie auch bei kleinen Gehäusen platzsparend angeordnet werden kann und ein leichtes Einlegen der Vorratsrolle ermöglicht.

Diese Aufgabe wird bei einer Vorrichtung der eingangs genannten Art gemäß dem kennzeichnenden Teil des ersten Patentanspruches gelöst.

Vorteilhafte Ausführungsformen der Erfindung sind in den Unteransprüchen gekennzeichnet.

Die erfindungsgemäße Haltevorrichtung, insbesondere für Lochstreifenvorratsrollen, weist einen Aufnahmekern auf, der auf einem verschwenkbaren Haltebügel angeordnet ist. Ein Führungsbügel ist auf dem Haltebügel im Bereich des Aufnahmekernes um eine Achse senkrecht zu der Lagerachse des Aufnahmekernes verschwenkbar gelagert. Im abgeschwenkten Zustand bildet der Führungsbügel mit seinen Schenkeln eine Aufnahmetasche für den Wickel, in die zum Aufsetzen des Wickels auf den Aufnahmekern der Wickel zunächst eingeschoben und dann durch Verschwenken des Aufnahmebügels auf den Aufnahmekern aufgesetzt wird.

Der Führungsbügel ist auf dem Haltebügel entgegen einer Federkraft verschwenkbar gelagert, wobei zur Erzeugung der Federkraft der Führungsbügel im Bereich seiner Lagerung federnd ausgebildet ist und der Haltebügel außermittig zur Lagerachse des Wickels gelagert ist.

Ein Einschnitt in einem Lochergehäuse dient in der Arbeitsstellung einer Lochstreifenvorratsrolle als Führungselement.

Damit ergibt sich eine kostengünstige, funktionell einfache und platzsparende Lochstreifenvorratsrollen-Halte- und Abwickeleinrichtung, bei der Teile des Gerätes selbst als Führungselemente für die Lochstreifenvorratsrolle dienen.

Eine Ausführungsform der Erfindung ist in den Zeichnungen dargestellt und wird im folgenden anhand der einzelnen Figuren näher beschrieben.

Es zeigen

Fig. 1 eine schematische Darstellung der Vorrichtung mit eingelegter Lochstreifenrolle in Seitenansicht,

Fig. 2 eine schematische Ansicht der Vorrichtung von oben,

Fig. 3 eine schematische Darstellung der Vorrichtung mit abgeschwenktem Führungsbügel beim Einlegen der Lochstreifenrolle und

Fig. 4 eine schematische Darstellung der Vorrichtung mit abgeschwenktem Haltebügel.

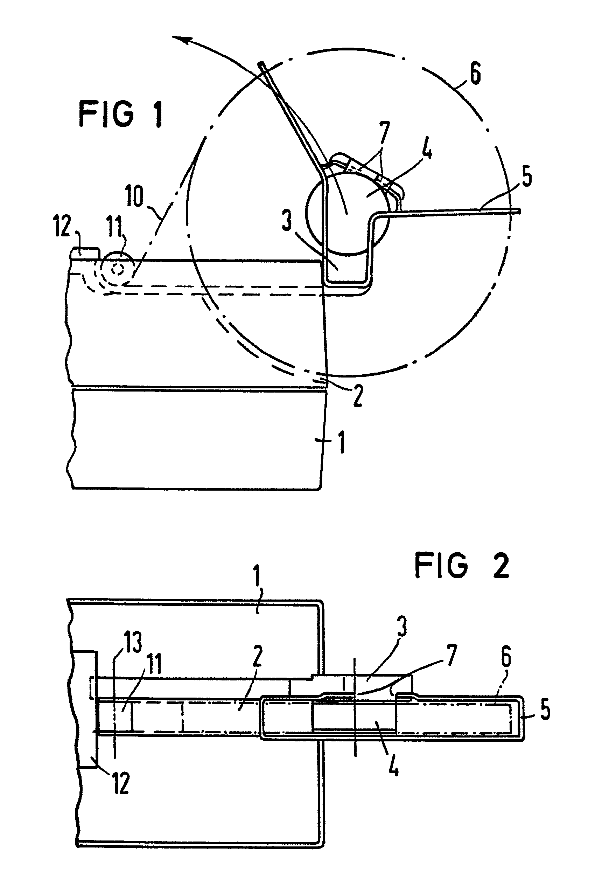

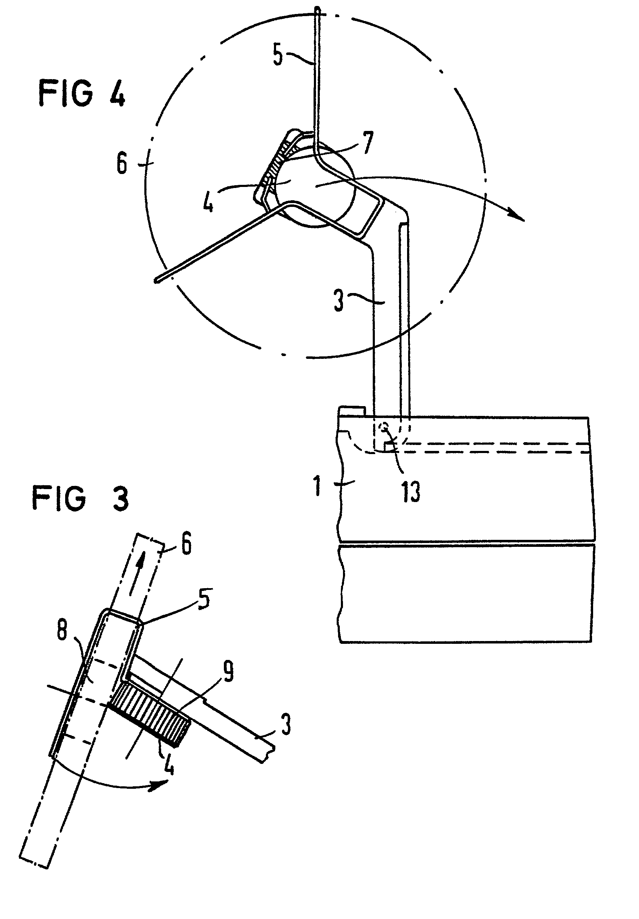

Ein hier nicht im einzelnen beschriebenes Lochstreifengerät für eine Fernschreibmaschine ist in einem Gehäuse 1 untergebracht. Das Lochstreifengerät enthält eine Lochstreifenvorratsrollenhalterung aus einem am Gehäuse am Ende eines Führungseinschnittes 2 um eine ortsfeste Achse 13 verschwenkbar angebrachten Haltebügels 3 an dessen anderen Ende ein Aufnahmekern 4 drehbar gelagert ist. Außermittig zur Achse des Aufwickelkernes ist ein aus einem Drahtbügel bestehender Führungsbügel 5 zur Aufnahme- und Führung eines Lochstreifenwickels 6 verschwenkbar angeordnet. Der Drahtbügel des Führungsbügels 5 ist dabei so geformt, daß er den Lochstreifenwickel an zwei Stellen U-förmig umfaßt und so eine abschwenkbare Aufnahmetasche zum Einlegen des Lochstreifenwickels bildet. Durch die außermittige nichtfluchtende Lagerung 7 des Führungsbügels 5 am Ende des Haltebügels 3 ergibt sich eine federnde Wirkung des Führungsbügels 5 in der Art, daß beim Auslenken aus der Arbeitslage entsprechend der Fig. 1 in eine Aufnahmelage entsprechend der Fig. 3 der Federbügel 5 eine Rückkehr in die Arbeitslage anstrebt.

Die Funktion der Lochstreifenvorratsrollenhalterung ist nun wie folgt. Zum Einlegen eines Lochstreifenwickels 3 wird entsprechend der Fig. 4, zunächst die gesamte Halterung mit dem Haltebügel 3 entgegen der Pfeilrichtung nach außen verschwenkt. Dann wird entsprechend der Fig. 3 der federnd wirkende Führungsbügel 3 entgegen der dargestellten Pfeilrichtung seitlich verschwenkt und der Lochstreifenwickel 6 in Pfeilrichtung in die entstehende Tasche des Führungsbügels 3 eingeschoben. Der Federbügel 3 schwenkt nun selbständig aus der in der Fig. 3 dargestellten Einschublage in die Arbeitslage in Pfeilrichtung zurück und schiebt dabei den Lochstreifenwickel 6 mit seiner Zentralöffnung 8 auf den drehbaren an seinem Umfang mit Riffelungen 9 versehenen Aufnahmekern 4 auf. Nach Einlegen des Lochstreifenwickels 6 wird der Haltebügel 3 entsprechend der Figur in Pfeilrichtung nach unten verschwenkt und damit in Arbeitslage gebracht. Der Lochstreifenwickel 6 greift dabei teilweise in den Gehäuseeinschnitt 2 des Lochstreifengehäuses 1 ein und wird von diesem zusätzlich geführt. Nach Einfädeln des Lochstreifens 10 nach Umlenkung durch eine Umlenkrolle 11 in eine hier nur schematisch dargestellte Transporteinrichtung 12 ist die Lochervorrichtung betriebsbereit.

Die vorstehend beschriebene Vorrichtung zum Halten und Führen von rollenförmig auf einem Aufnahmekern aufgesteckten wickelförmigen Aufzeichnungsträger wurde anhand einer Lochenstreifeneinheit für eine Fernschreibmaschine beschrieben. Die beschriebene Vorrichtung läßt sich jedoch auch zum Halten und Führen von anderen wickelförmigen Aufzeichnungsträgern verwenden, wie Magnetbändern oder anderen streifenförmigen Aufzeichnungsträgern.

**Patentansprüche**

1. Vorrichtung zum Halten und Führen von rollenförmig auf einen Aufnahmekern (4) aufgesteckten, zu einem Wickel (6) aufgewickelten Aufzeichnungsträgern mit einem schwenkbar gelagerten, U-förmigen, im Arbeitszustand die Seitenflächen des Wickels (6) mit seinen Schenkeln beidseitig überdeckenden Führungsbügel (5), der um eine Achse senkrecht zu der Lagerachse des Aufnahmekernes (4) verschwenkbar gelagert ist und in den zum Aufsetzen des Wickels (6) auf den Aufnahmekern (4) der Wickel (6) zunächst eingeschoben wird, dadurch gekennzeichnet, daß einerseits der Aufnahmekern (4) auf einem außerhalb des aufzunehmenden Wickels (6) um eine ortsfeste Drehachse (13) verschwenkbaren Haltebügel (3) und andererseits der Führungsbügel (5) auf dem Haltebügel (3) im Bereich des Aufnahmekernes (4) um die Achse senkrecht zu der Lagerachse des Aufnahmekernes (4) verschwenkbar gelagert ist, wobei der Führungsbügel (5) im abgeschwenkten Zustand mit seinen Schenkeln eine Aufnahmetasche für den Wickel (6) bildet, in die der Wickel (6) eingeschoben und durch Verschwenken des Führungsbügels (5) auf den Aufnahmekern (4) aufgesetzt wird.

2. Vorrichtung nach Anspruch 1, dadurch gekennzeichnet, daß der Führungsbügel (5) auf dem Haltebügel (4) entgegen einer Federkraft verschwenkbar gelagert ist.

3. Vorrichtung nach Anspruch 2, dadurch gekennzeichnet, daß zur Erzeugung der Federkraft der Führungsbügel (5) im Bereich seiner Lagerung (7) federnd ausgebildet und am Haltebügel (3) außermittig zur Lagerachse des Wickels (6) gelagert ist.

4. Vorrichtung nach einem der Ansprüche 1 bis 3, dadurch gekennzeichnet, daß das den Haltebügel (5) aufnehmende Gehäuse (1) einen Einschnitt (2) zur Führung des Wickels (6) in der Arbeitslage aufweist.

5. Vorrichtung nach Anspruch 4, dadurch gekennzeichnet, daß die ortsfeste Drehachse (13) am Ende des Gehäuseeinschnittes (2) angeordnet ist und Führungselemente (11) für den Aufzeichnungsträger (10) aufweist.

**Claims**

1. Apparatus for supporting and guiding recording media wound up into a roll (6) and set in the form of a roll onto a receiving spool (4), having a pivotably mounted, U-shaped guide stirrup (5), which in the working state overlaps with its legs the lateral surfaces of the roll (6) on both sides, which stirrup is mounted to pivot about an axis perpendicular to the bearing axis of the receiving spool (4), and into which the roll (6) is initially pushed in order to fit the roll (6) onto the receiving spool (4), characterized in that firstly the receiving spool (4) is mounted on a support stirrup (3) outside the roll (6) to be received and pivoting about a stationary axis of rotation (13), and secondly the guide stirrup (5) is mounted on the support stirrup (3) in the region of the receiving spool (4) to pivot about the axis perpendicular to the axis of rotation of the receiving spool (4), the guide stirrup (5) in the pivoted-down position forming with its legs a receiving pocket for the roll (6) into which the roll (6) is pushed and fitted on the receiving spool (4) by pivoting of the guide stirrup (5).

2. Apparatus according to Claim 1, characterized in that the guide stirrup (5) is mounted on the support stirrup (4) to pivot against a spring force.

3. Apparatus according to Claim 2, characterized in that, in order to generate the spring force, the guide stirrup (5) is of resilient design in the region of its mounting (7) and is mounted on the support stirrup (3) eccentrically to the bearing axis of the roll (6).

4. Apparatus according to one of Claims 1 to 3, characterized in that the housing (1) receiving the support stirrup (5) possesses a recess (2) to guide the roll (6) in the working position.

5. Apparatus according to Claim 4, characterized in that the stationary axis of rotation (13) is located at the end of the housing recess (2), and possesses guide elements (11) for the recording media (10).

**Revendications**

1. Dispositif pour maintenir et guider des supports d'enregistrement, qui sont emmanchés sur un noyau récepteur (4) et sont enroulés sous la forme d'une bobine (6), et comportant un étrier de guidage en forme de U (5), qui est monté pivotant et, dans la position de travail, recouvre de deux côtés, par ses branches, les surfaces latérales de la bobine (6) et est monté de façon à pouvoir pivoter autour d'un axe perpendiculaire à l'axe de tourillonnement du noyau récepteur (4) et dans lequel on insère tout d'abord la bobine (6) pour sa mise en place sur le noyau récepteur (4), caractérisé par le fait que d'une part le noyau récepteur (4) est monté, de manière à pouvoir basculer, sur un étrier de support (3) pouvant basculer autour d'un axe fixe de rotation (13), à l'extérieur de la bobine (6) devant être montée, et d'autre part l'étrier de guidage (5) est monté sur l'étrier de support (3), au voisinage du noyau récepteur (4), de manière à pouvoir basculer autour de l'axe perpendiculaire à l'axe de tourillonnement du noyau récepteur (4), auquel cas, lorsque l'étrier de guidage (5) est dans son état écarté par basculement, il forme, par ses branches, un logement récepteur pour la bobine (6), dans lequel on insère la bobine (6) et on la met en place sur le noyau récepteur (4), au moyen d'un basculement de l'étrier de guidage (5).

2. Dispositif suivant la revendication 1, caractérisé par le fait que l'étrier de guidage (5) est monté sur l'étrier de support (4) de manière à pouvoir basculer à l'encontre d'une force élastique.

3. Dispositif suivant la revendication 2, caractérisé par le fait que, pour la production de la force élastique, l'étrier de guidage (5) est agencé de manière à être élastique au niveau de son support (7) et est monté sur l'étrier de support (3) en étant excentré par rapport à l'axe de support de la bobine (6).

4. Dispositif suivant l'une des revendications 1 à 3, caractérisé par le fait que le boîtier (1), qui reçoit l'étrier de support (5), possède une découpe (2) servant au guidage de la bobine (6) dans la position de travail.

5. Dispositif suivant la revendication 4, caractérisé par le fait que l'axe fixe de rotation (13) est disposé sur l'extrémité de la section (2) du boîtier et comporte des éléments de guidage (11) pour le support d'enregistrement (10).

FIG 1

FIG 2

FIG 4

5

6

7

4

3

1

13

FIG 3

6

5

8

9

3

4